Europäisches Patentamt

European Patent Office

Office européen des brevets

(11) Publication number: **0 392 815**
**A1**

# EUROPEAN PATENT APPLICATION

(21) Application number: **90303891.7**

(22) Date of filing: **11.04.90**

(51) Int. Cl.5: **B60T 8/26**

(30) Priority: **13.04.89 GB 8908336**
**07.07.89 GB 8915566**

(43) Date of publication of application:
**17.10.90 Bulletin 90/42**

(84) Designated Contracting States:
**DE FR GB IT**

(71) Applicant: **LUCAS INDUSTRIES PUBLIC LIMITED COMPANY**
**Great King Street**
**Birmingham, B19 2XF(GB)**

(72) Inventor: **Farr, Glyn Phillip Reginald**
**21 The Hamlet**
**Leek Wootton, Warwickshire(GB)**

(74) Representative: **Spall, Christopher John et al**
**BARKER, BRETTELL & DUNCAN 138 Hagley Road**
**Edgbaston Birmingham B16 9PW(GB)**

(54) **Improvements in fluid pressure-operated braking systems for vehicles.**

(57) The cut-in point of a brake pressure control valve (4), suitably an apportioning valve or a cut-off valve, is adapted to be determined by the deceleration of the vehicle, and the input pressure. These parameters are sensed by suitable sensors (15, 16). The cut-in point is recognised by an electronic control unit (18) which receives signals from the sensors (15, 16) and, at that point, is operative to energise a solenoid-operated valve (20) which prevents any further direct increase in the pressure applied to the rear brakes (3) from a master cylinder (1).

EP 0 392 815 A1

FIG.1.

## IMPROVEMENTS IN FLUID PRESSURE-OPERATED BRAKING SYSTEMS FOR VEHICLES

This invention relates to fluid pressure-operated braking systems for vehicles and in particular to new or improved brake pressure control valve assemblies for use in such systems.

When the brakes on a moving vehicle are applied, the resulting inertial force transfers weight from the rear wheels to the front wheels. Thus the ideal braking ratio varies with vehicle deceleration from typical values of 60:40 front/rear split when static to 80:20 front/rear split when fully retarded.

To modify the braking ratio at high decelerations, apportioning valves are used. Such apportioning valves are adapted to transmit to the brakes on the rear wheels up to a predetermined level pressures equal to those applied to the brakes on the front wheels. Above this level, at a point known as the 'cut-in point', the pressure applied to the rear wheel brakes is modified, suitably such that it rises with a rise in input pressure, but at a reduced rate of pressure increase.

It is important that apportioning valves provide a high utilisation of braking effort for both an unladen driver only case and a fully laden case. A compromise is usually reached in which the rear wheel brake pressures are modified for driver only, or lightly laden, cases, but the rear wheel brakes are under utilised in the fully laden case.

In an attempt to improve the performances of the brakes for a fully laden vehicle, it is known to incorporate deceleration conscious or 'G' valves in braking systems. In a typical construction, an inertia-responsive ball resting on an inclined ramp is normally spaced from a stepped piston, and the piston incorporates a sealing face for the ball, with a central passage in the piston connecting an inlet to an outlet to the rear wheel brakes. At a predetermined deceleration, the ball moves up the ramp to close the passage which isolates the inlet from the outlet. When the inlet pressure acting over the smaller area of the stepped piston overcomes the trapped outlet pressure acting over the larger area of the piston, the outlet pressure increases but at a rate of pressure increase less than that at which the inlet pressure increases, namely in proportion to the ratio of the two areas.

Unfortunately deceleration conscious valves cannot sense the rear axle weight change, but only a change in the gross vehicle weight. For a typical front wheel drive car, a laden gross vehicle weight of 40% is distributed between the front and rear axles with the front having a 17% increase in weight, and the rear a 75% increase.

A more exact solution can be achieved by the provision of a so called 'load conscious' valve. In this valve a control piston is loaded by an external spring which senses the height change at the rear axle and thereby increases the force on the piston in the laden case. It will, however, by affected by the weight transfer from the rear wheels to the front wheels during vehicle deceleration. Such a valve is therefore linked to the rear axle.

According to our invention a brake pressure control valve assembly for a vehicle comprises an inlet adapted to be subjected to an inlet fluid pressure, an outlet adapted to be connected to rear wheel brakes of a vehicle, a solenoid-operated valve for controlling communication between the inlet and the outlet, vehicle deceleration sensing means, pressure sensing means, and an electronic control unit adapted to emit an energising current to operate the solenoid-operated valve in response to signals from the said sensing means, the solenoid-operated valve being operable at a cut-in point in response to the said energising current to prevent any further direct increase in the pressure applied to the rear brakes.

The solenoid-operated valve is adapted to close at the cut-in point.

The solenoid-operated valve may be normally open to permit unrestricted communication between the inlet and the outlet for normal braking, or it may be biased by a spring into a normally closed position, being adapted to open in response to a signal when the brake pedal is depressed. In the latter case a normally-open pressure-sensitive valve may be incorporated to define a fluid interchange between the inlet connection and the brake and which is adapted to close automatically at the cut-in point when subjected to a given pressure in the inlet connection.

We therefore provide a 'linkless' brake pressure control valve in which the cut-in point is determined by two parameters, namely the deceleration of the vehicle and the magnitude of the input pressure, and without the requirement of a mechanical link sensitive to a rear axle weight change, such as is required in valves of the load conscious type. The cut-in point is therefore infinitely variable according to the loading on the vehicle.

In a driver only or lightly laden case the cut-in point will occur before the cut-in point is reached in a fully laden case. This enables the rear brakes to be utilised more effectively than has hitherto been achieved with valves of the linkless type.

The control valve assembly may act as a pressure limiting valve in which the cut-in point at which the valve closes is determined by the two parameters discussed above.

The control valve assembly can also be adapted to act as a brake pressure apportioning valve.

In one construction of brake pressure apportioning valve a piston works in a bore in a housing, the inlet leads to an inlet chamber defined in the housing at one end of the bore, the outlet leads from an outlet chamber defined in the housing at the opposite end of the bore, a spring normally biases the piston towards the inlet chamber, and the solenoid-operated valve controls communication between the inlet chamber and the outlet chamber through a passage which interconnects the two chambers, the solenoid-operated valve being adapted to close in response to an energising current to prevent any further direct increase in the pressure applied to the rear brakes, whereafter further increases in the pressure in the inlet chamber cause the pressure in the outlet chamber to increase indirectly but at a lower rate of pressure increase by displacement of the piston in the bore against the loading in the spring.

As before the cut-in point at which the solenoid-operated valve closes is determined by the same two parameters, but the pressure applied to the rear brakes after a cut-in point has been reached can continue to rise at a rate controlled by the load in the spring of which the rate is matched to the stiffness of the rear system.

The valve assembly may be incorporated in a braking system which includes of a booster-operated hydraulic master cylinder of which the booster is controlled electronically by signals from an electronic controller. Such a booster forms the subject of our E.P. Application No. 90300427.3 filed 16th January 1990. In such a construction the output load cell which measures the pressure in the master cylinder, equivalent to the inlet fluid pressure, can be used as the pressure sensing means.

When the vehicle is equipped with an anti-lock braking system having an electronic controller, and a modulator assembly including at least one inlet solenoid-operated valve responsive to anti-lock signals from the controller, a signal of vehicle deceleration can be obtained from the controller, and the inlet solenoid-operated valve can be used to isolate the inlet from the outlet.

This is a very convenient arrangement in which the construction of the valve assembly itself is simplified due to the utilisation of components of the anti-lock braking system.

In the constructions described above, the signal from the pressure sensing means may be received by one electronic controller adapted to control operation of the solenoid-operated valve for controlling communication between the inlet and the outlet, and the signal from a wheel speed sensor may be received by a second electronic controller. In such a system both controllers are adapted to talk to each other.

In a modification, however, both controllers may be integrated into a single, common, electronic controller assembly.

Some embodiments of our invention are illustrated in the accompanying drawings in which:-

Figure 1 is a layout of an hydraulic braking system for a vehicle;

Figure 2 is a layout of a modified system;

Figure 3 is a graph of input pressure plotted against output pressure;

Figure 4 is a graph of input pressure plotted against vehicle deceleration;

Figure 5 is a layout of an anti-lock hydraulic braking system for a vehicle;

Figure 6 is a layout of a system similar to Figure 5 but showing a modification;

Figure 7 is a layout of modified portion of a system for incorporation in the systems of Figures 5 and 6; and

Figure 8 is a layout of another modified portion for incorporation in the system of Figures 5 and 6.

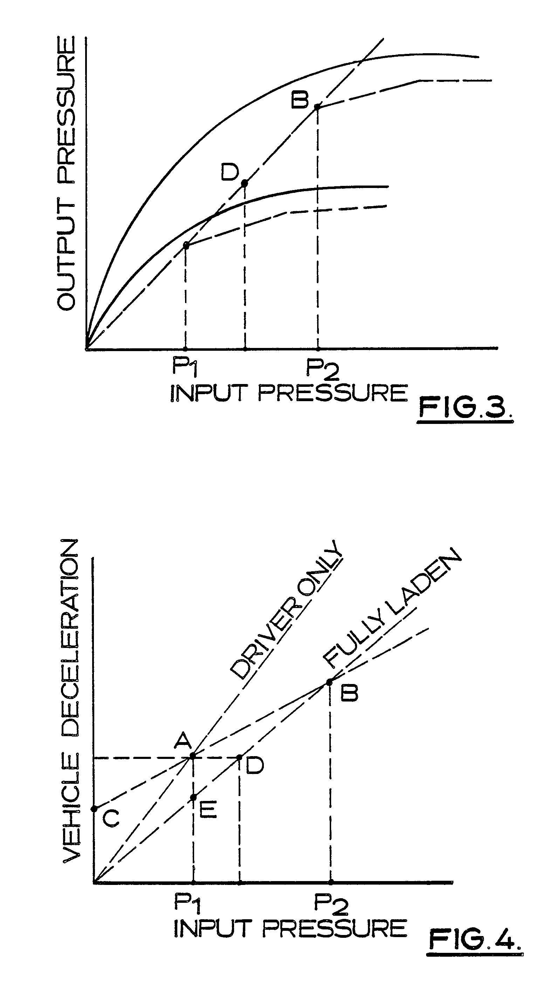

The graph of Figure 3 shows the ideal pressure characteristics for braking a vehicle fully laden and driver only unladen case together with preferred cut-in points A and B, as defined herein, which relate to input pressures P1 and P2 respectively. The point D represents the actual cut-in point which a conventional deceleration conscious or 'G' valve would give, since valves of this type respond only to gross vehicle weight change and cannot sense rear axle weight change. To increase the rear brake utilisation in the laden case therefore, the relationship between vehicle deceleration and input pressure must be modified to provide the preferred cut-in point B.

The graph of Figure 4 shows the relationship between vehicle deceleration and input pressure for the fully laden and driver only unladen cases and once more shows preferred cut-in points A and b which relate to input pressures P1 and P2. The chain dotted line through A and B passes through the vertical axis at point C when the input pressure is zero which indicates the necessary modified relationship between vehicle deceleration and input pressure. The graph of Figure 3 also shows point D which occurs at the same deceleration level as point A for the driver only case, that is to say the cut-in point for a conventional deceleration conscious or 'G' valve. The input pressure P1 passes through an extension of BD at point E.

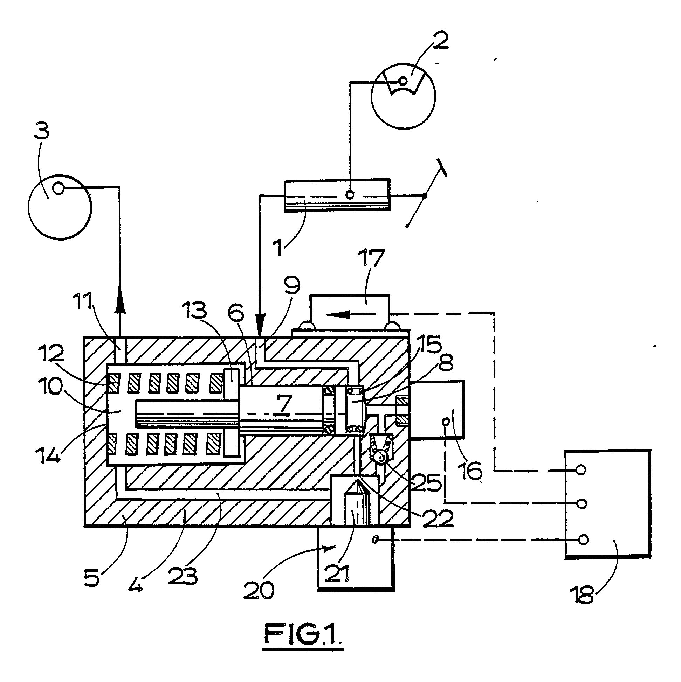

In the hydraulic braking system illustrated in Figure 1 of the accompanying drawings for a vehicle, a tandem hydraulic master cylinder 1 has primary and secondary pressure spaces of which pressure from the primary space is adapted to be applied to brakes 2 on the front wheels directly, and pressure from the secondary space is adapted to be applied to brakes 3 on the rear wheels through a brake-pressure apportioning valve assembly 4.

The valve assembly 4 comprises a housing 5 having a stepped bore 6 in the· smaller portion of which works a piston 7. The master cylinder 1 is connected to an inlet chamber 8 at the end of the bore 6 remote from the larger portion through an inlet connection 9. The larger portion of the bore defines an outlet chamber 10 which is connected to the brake 3 through an outlet connection 11. The piston 7 is biased towards the inlet chamber 8 by a strong spring 12 which acts between a radial abutment 13 on the piston 7 and a wall 14 at the adjacent end of the bore 6, and a spring 15 substantially lighter than the spring 12 and housed in the inlet chamber 8 urges the piston 7 in the opposite direction.

An input pressure sensor 16 mounted on one end of the housing 5 is adapted to sense the inlet pressure in the chamber 8, and the deceleration of the vehicle is adapted to be sensed by a vehicle deceleration sensor 17 mounted on the housing 5 with its main axis lying in the same direction as the main longitudinal axis of the vehicle. Signals from the two sensors 14 and 15 are fed into an electronic control unit 18 which is adapted to emit an electrical energising current of a magnitude dependent upon the magnitude and nature of the signals.

A solenoid-operated control valve 20 mounted in the housing 5 is adapted to control communication between the inlet chamber 8, and the outlet chamber 10. The solenoid-operated valve 20 comprises a valve head 21 for engagement with a seating 22 at a intermediate point in the length of a passage 23 which interconnects the two chambers 8 and 10. In a normal open position the valve head 21 is urged away from the seating 22 by a spring (not shown) and in a closed position the head 21 is urged into engagement with the seating 22 upon energisation of an armature by the energising current emitting from the control unit 18.

A one-way valve 25 provides communication from the output chamber 10 and into the input chamber 8 in a reverse direction when the solenoid-operated valve 20 is closed.

In the normal inoperative position shown in the drawings the solenoid-operated valve 20 is in its normal open position to permit free communication between the inlet chamber 8 and the outlet chamber 10. The piston 7 is lightly loaded by the spring 15 against the spring 12 which is normally at its free length.

When the master cylinder 1 is operated by a pedal pressurised fluid is supplied directly to the front wheel brake 2 and indirectly to the rear wheel brake 3 through the apportioning valve 4, from the inlet chamber 8 to the outlet chamber 10 through the open solenoid-operated valve 20. Normally an increase in the applied pressure will cause an increase in the deceleration of the vehicle.

When the magnitude and nature of the signals from the pressure sensor 16 and/or the deceleration sensor 17 are recognised by the electronic control unit 18 as indicative of a cut-in point having been attained, the control unit 18 emits an electric current which energises the armature of the solenoid-operated valve 20 to cause the valve to close. This isolates the input chamber 8 from the output chamber 10 to prevent any further direct increase in the pressure applied to the new brakes 3. As the input pressure increases further, however, the piston 7 moves in the bore 6 against the force in the larger spring 12 whose rate is matched to the rear system stiffness. This displacement of the piston 7 in the bore 6 provides a further increase in the pressure applied to the rear brakes 3, but at a rate of pressure increase less than that at which the input pressure increases as it is working against the effect of the increasing force in the spring 12.

As shown in the graph of Figure 4, in a driver only unladen case the vehicle deceleration/input pressure relationship crosses the line CAB at point A, which represents the cut-in point at which the solenoid-operated valve 20 closes.

Similarly, for a fully laden case a similar sequence to that described above occurs, except that the solenoid-operated valve 20 closes at point B, from which it will be observed that the rear brakes 3 can be more effectively utilised.

When the master cylinder 1 is released, fluid can be returned to the reservoir of the master cylinder 1, through the one-way valve 25 should the solenoid-operated valve 20 still be in its closed position.

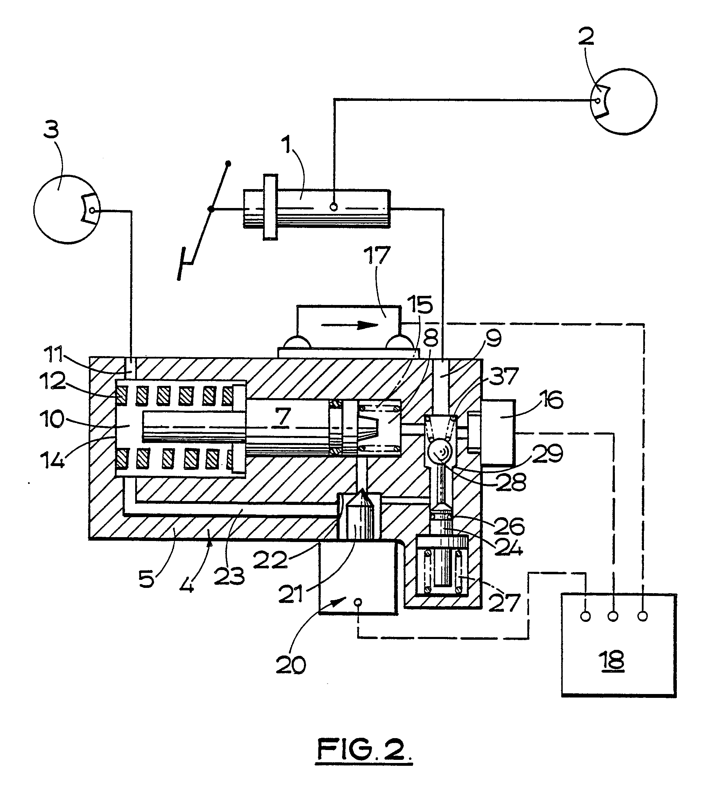

In the braking system illustrated in Figure 2 of the accompanying drawings the one-way valve 25 is replaced by a pressure-sensitive by-pass valve 25′. The pressure sensitive valve comprises a piston 24 which works in a bore 26 and is urged by a spring 27 in a direction normally to hold a valve member 28 away from a seating 29 between the passage 9 and the passage 23, against the force in a lighter spring 37.

The solenoid-operated valve 20 is normally urged into a closed position by its spring.

Normally the pressure-sensitive valve 25′ is held open by the spring 27, and the solenoid-operated valve 20 is closed. Normal fluid interchange between the master cylinder 1 and the brake 3 therefore takes place through the open pressure-sensitive valve 25′, for example upon release of a brake pedal.

When the master cylinder 1 is operated in the driver only unladen or lightly laden case fluid flows to the rear brake through the pressure-sensitive valve 25' and the solenoid-operated valve 20 opens in response to a signal from the control unit 18 which is emitted when the brake pedal is depressed. At point A in the graph of Figure 3, as before, the solenoid-operated valve 20 is closed by a signal from the control unit 18. The pressure-sensitive valve 25' also closes at that point since the piston 24 is subjected to a net force which overcomes the load in the spring 27, normally the force in the spring 37 plus a force due to the pressure at the master cylinder 21 acting over the adjacent end of the piston 24.

In the fully laden case the pressure-sensitive valve 25' again closes at point A when subjected to a corresponding pressure from the master cylinder 1. However, since the magnitude of vehicle deceleration is lower, see point E in Figure 4, the solenoid-operated valve 20 opens to permit an increase in the pressure applied to the rear brake 3 until the line CAB is crossed again. At this point the solenoid-operated valve 20 closes again.

As will be appreciated, the braking system of Figure 2 will provide some apportioning of pressure applied to the rear brake 3, even if the electronic control unit and/or the solenoid-operated valve 20 should fail.

The construction and operation of the system of Figure 2 is otherwise the same as that of Figure 1, and corresponding reference numerals have been applied to corresponding parts.

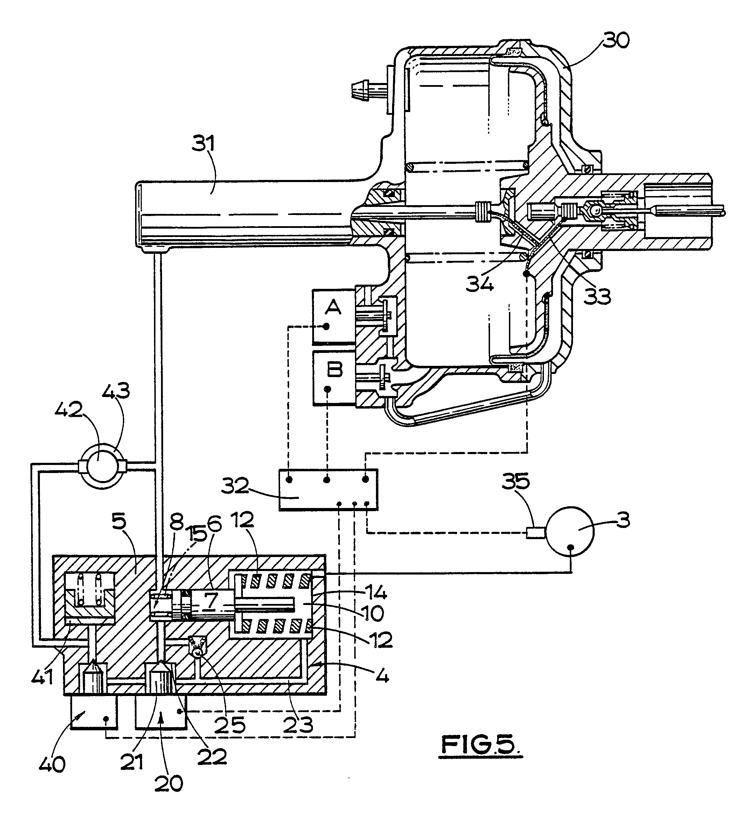

In the braking system illustrated in Figure 5 of the accompanying drawings, the apportioning valve 4 is modified for incorporation into an anti-lock braking system.

The system illustrated in Figure 5 comprises an electronically-controlled vacuum suspended booster 30 for operating a hydraulic tandem master cylinder 31 of which a primary pressure space operates the front wheel brakes (not shown) directly, and the secondary pressure space operates the rear wheel brake 3 indirectly through the apportioning valve 4.

The booster 30 need not be further described in detail herein since it forms the subject of our E.P. Application No. 90300427.3 and is described in detail in the specification of that application with reference to Figure 4 of the accompanying drawings.

The operation of the booster 30 is controlled by an electronic controller 32 which is responsive to signals from an input load cell 33 and from an output load cell 34, and is operative, in response to such signals, to control energisation of a solenoid-operated inlet valve (A), and a solenoid-operated isolating valve (B).

In addition, the electronic controller 32 receives signals from a wheel speed sensor 35 for sensing the behaviour of the rear wheels braked by the brake 3.

The electronic controller 32 is common to the booster 30 and the apportioning valve 4 which enables us to omit the control unit 18, and the controller 32 comprises an assembly in which are integrated separate electronic controllers responsive, respectively, to signals from the load cell 33 and the speed sensor 35. The output load cell 34 of the booster 30 provides a signal which is equivalent to the input pressure from the master cylinder 1 to the apportioning valve 4. The output load cell 34 is equivalent to and therefore acts as a pressure sensor which enables us to omit the actual pressure sensor 16. Finally, since the wheel speed signals from the sensor 35 can be converted within the controller 32 to provide the vehicle deceleration, we can omit the actual deceleration sensor 17 itself.

The housing 5 of the apportioning valve 4 is modified to include a second solenoid-operated valve 40 which is normally closed to isolate the passage 23 from an expander chamber 41 in the housing 5.

A pump 42 driven by an electric motor 43, of which energisation is also controlled by the controller 32, is adapted to draw fluid from the expander chamber 41 and return it to the inlet chamber 8.

For normal operation of the system all the solenoid-operated valves A,B,20 and 40 are de-energised so that the valve 20 closed. The motor 43 is also de-energised.

For normal operation the solenoid-operated valve 20 is energised at the relevant cut-in point to operate the apportioning valve 4 as described above.

If the controller 32 receives a skid signal from the sensor 35, the valve 20 closes, if open, or remains closed, if closed, to isolate the inlet chamber 8 from the rear brake 3. At the same time the solenoid-operated valve 40 opens to relieve the pressure applied to the brakes 31 to the expander chamber 41. Thereafter, in a known manner, the pump 42 is operative to return fluid from the expander chamber 41 to the inlet chamber 8. After the wheel has recovered, the solenoid-operated valve 40 closes and the solenoid-operated valve 20 is pulsed or cycled to re-apply the inlet pressure to the rear brakes 31, at a controlled rate.

The construction and operation of the system of Figure 5 is otherwise the same as that of Figure 1, and corresponding reference numerals have been applied to corresponding parts.

The spring loaded piston 7 may be omitted from the apportioning valves of Figure 1 and 5. This modifies the valve to act as a cut-off valve which closes at the relevant cut-in point to isolate the rear brake 31 from the supply. Since the piston 7 has been omitted no further increase in the pressure applied to the rear brakes can be generated.

In the systems described above, if the temperature of the brake fluid is raised during braking, the fluid will expand and will therefore increase the level of pressure. Although increase in pressure can therefore occur, it is not generated by one driver/system demand.

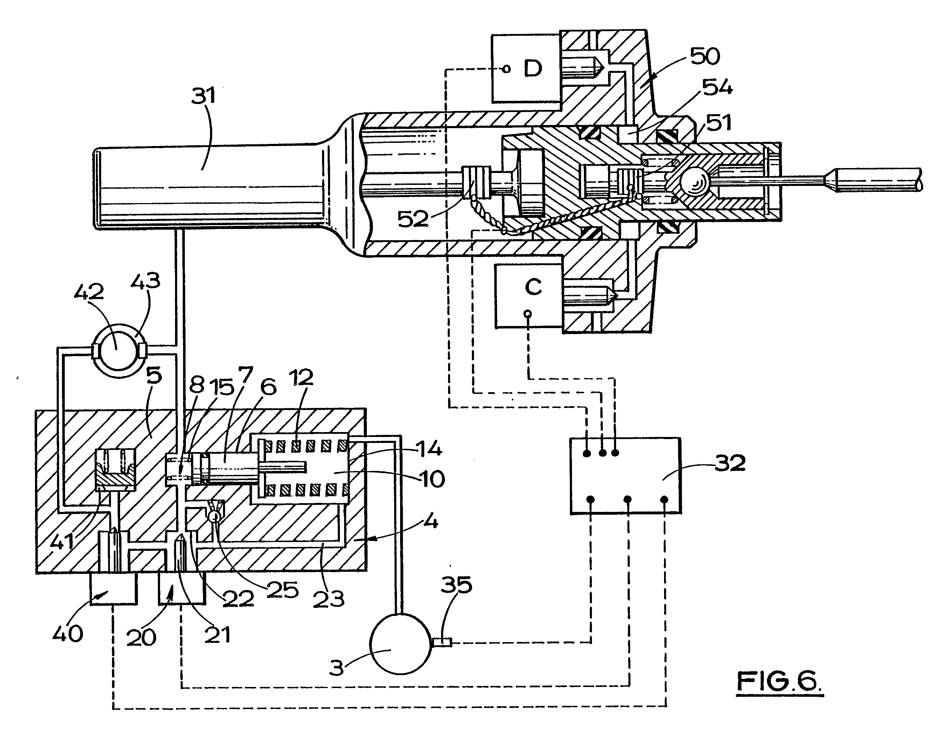

In the braking system illustrated in the layout of Figure 6 the vacuum suspended booster 30 is replaced by an hydraulic booster 50.

The booster 50 need not be further described in detail herein since it forms the subject of our E.P. Application No. 90300427.3, and is described in detail in that application.

The operation of the booster 50 is controlled by the electronic controller 32 which is responsive to signals from an input load cell 51 and from an output load cell 52, and is operative, in response to such signals, to control energisation of a normally closed solenoid-operated valve (C) which controls communication between a source of high pressure fluid and a boost chamber 54 and a solenoid-operated reservoir valve (D), which is normally open to establish free and unrestricted communication between the boost chamber 54 and a reservoir for fluid.

For normal operation of the system all the solenoid-operated valves C, D, 20 and 40 are de-energised so that the valves 20 and C are closed, and the valves 40 and D are open.

When the pedal is operated, the valves C and D are operated in sequence to energise the booster 50 by closing the valve D and opening the valve C.

The construction and operation of the system of Figure 6 is otherwise the same as that of Figure 5, and corresponding reference numerals have been applied to corresponding parts.

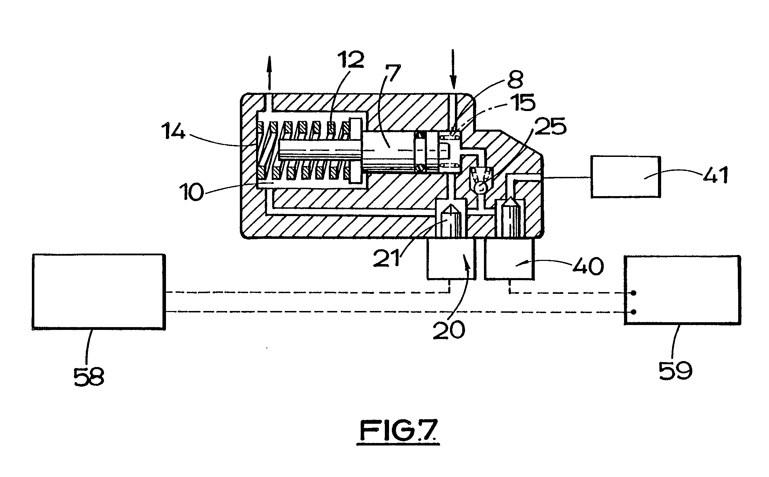

In the portion of the braking system illustrated in Figure 7 of the accompanying drawings, the combined electronic controller assembly 32 is replaced by two separate electronic controllers 58 and 59. The controller 58 is responsive to signals from the load cells 33 and 34, and the controller 59 is responsive to signals from the wheel speed sensor 59.

In this system both controllers 58 and 59 are adapted to talk to each other.

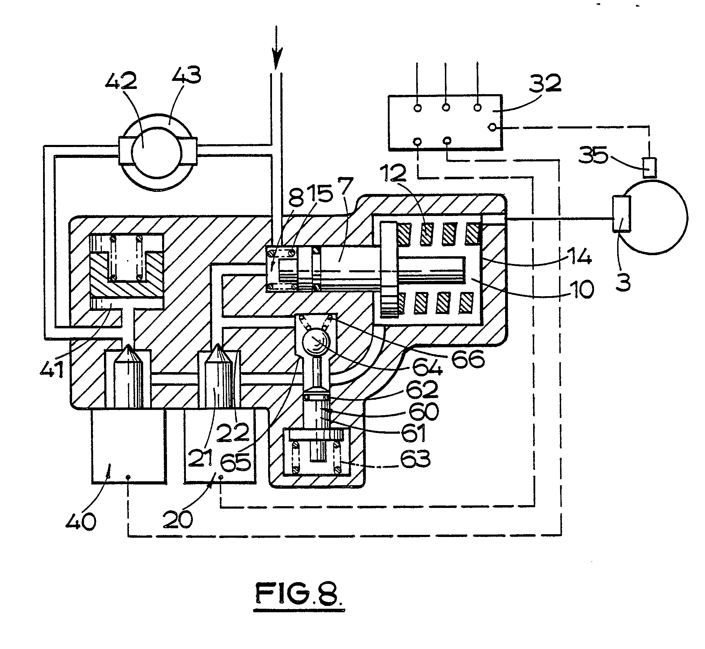

In the braking system illustrated in Figure 8 of the accompanying drawings, the valve assembly 4 of Figures 5 and 6 is modified in a similar manner to that of Figure 2. Specifically the solenoid-operated valve 20 is spring-urged in a direction such that it is normally closed, and the one-way valve 25 is replaced by a pressure-sensitive valve 60. As in the system of Figure 2 the pressure-sensitive valve 60 comprises a piston 61 which works in a bore 62 and is urged by a spring 63 in a direction normally to hold a valve member 64 away from a seating 65 between the chamber 8 and the rear wheel brake 31, against the force in a lighter spring 66.

Since the solenoid-operated valve 20 is normally closed, normal fluid interchange between the master cylinder 1 and the brake 3 takes place through the normally open pressure-sensitive valve 60.

When the master cylinder is operated in the driver only unladen or lightly laden case fluid flows to the rear brake 3 through the pressure-sensitive valve 60 and through the solenoid-operated valve 20 which opens in response to a signal from the electronic controller 32 which is emitted when the pedal is depressed.

The pressure-sensitive valve 60 closes at a relatively low pressure, at which point the solenoid-operated valve 20 is opened by the controller 32 to permit the application of pressure to the rear brake 3. When the characteristic crosses the line CAB at point A in the graph of Figure 4, the solenoid-operated valve 20 closes again. If the applied pressure is relieved or released, fluid from the brake 3 is returned to the master cylinder by reverse flow through the pressure-sensitive valve 60, specifically by the valve member 64 moving relatively away from the seating 65 and away from the piston 61 against the load in the spring 66.

For the fully laden case, the pressure-sensitive valve 60 closes as before and the solenoid-operated valve 20 opens. When the characteristic crosses the line CAB at B, the solenoid-operated valve 20 closes again.

Should a failure occur in any of the electronic equipment or components and the controller 32 shuts down, the front wheel brakes can be applied normally, but the rear wheel brakes can only be pressurised to a level determined by the pressure-sensitive valve 60 since the solenoid-operated valve 20 remains closed. This will prevent a premature rear wheel lock with resultant lack of vehicle stability.

## Claims

1. A brake pressure control valve assembly for a vehicle comprising an inlet (9) adapted to be subjected to an inlet fluid pressure (1), an outlet (11) adapted to be connected to rear wheel brakes (3) of a vehicle, and a solenoid-operated valve (20) for controlling communication between the inlet and the outlet, characterised by vehicle deceleration sensing means (17), pressure sensing means (16), and an electronic control unit (18) adapted to emit an energising current to operate the solenoid-operated valve (20) in response to signals from the said sensing means (17, 16), the solenoid-operated valve (20) being operated at a cut-in point in response to the said energising current to prevent any further direct increase in the pressure applied to the rear brakes.

2. A valve assembly according to claim 1, characterised in that the solenoid-operated valve (20) is adapted to close at the cut-in point.

3. A valve assembly according to claim 1 or claim 2, characterised in that the solenoid-operated valve (20) is normally open to permit unrestricted communication between the inlet (9) and the outlet (11) for normal braking.

4. A valve assembly according to claim 1 or claim 2, characterised in that the solenoid-operated valve (20) is biased by a spring into a normally closed position, and the valve (20) is adapted to open in response to a signal from said sensing means (17, 16) when a brake pedal is depressed.

5. A valve assembly according to claim 4, characterised in that a normally-open pressure-sensitive valve (25′) is incorporated to define a fluid interchange between the inlet connection (9) and the brake (3) and which is adapted to close automatically at the cut-in point when subjected to a given pressure in the inlet connection.

6. A valve assembly according to any preceding claim, characterised in that the control valve assembly acts as a pressure limiting valve in which the cut-in point at which the valve assembly is adapted to close is determined by the two parameters of the deceleration of the vehicle and the magnitude of the input pressure.

7. A valve assembly according to any of claims 1 - 5, characterised in that the control valve assembly is adapted to act as a brake pressure apportioning valve.

8. A valve assembly according to claim 7, characterised in that in the brake pressure apportioning valve a piston (7) works in a bore (6) in a housing (5), the inlet (9) leads to an inlet chamber (8) defined in the housing at one end of the bore, the outlet (11) leads from an outlet chamber (10) defined in the housing at the opposite end of the bore, a spring (12) normally biases the piston towards the inlet chamber, and the solenoid-operated valve (20) controls communication between the inlet chamber (8) and the outlet chamber (10) through a passage (23) which interconnects the two chambers, the solenoid-operated valve (20) being adapted to close in response to an energising current to prevent any further direct increase in the pressure applied to the rear brakes (3), whereafter further increases in the pressure in the inlet chamber(8) cause the pressure in the outlet chamber (10) to increase indirectly but at a lower rate of pressure increase by displacement of the piston (7)

in the bore (6) against the loading in the spring (12).

9. A valve assembly according to claim 8, characterised in that the cut-in point at which the solenoid-operated valve (20) is adapted to close is determined by the two parameters of the deceleration of the vehicle and the magnitude of the input pressure, but the pressure applied to the rear brakes (3) after a cut-in point has been reached can continue to rise at a rate controlled by the load in the spring (12) of which the rate is matched to the stiffness of the rear system of the vehicle.

10. A vehicle hydraulic braking system incorporating a brake pressure control valve assembly according to any preceding claim in which the system includes a booster-operated hydraulic master cylinder (30,31) characterised in that the booster (30) is controlled electronically by signals from an electronic controller (32), and an output load cell (34) adapted to measure the pressure in the master cylinder, equivalent to the inlet fluid pressure, is adapted to be used as the pressure sensing means (16).

11. A vehicle hydraulic anti-lock braking system incorporating a brake pressure control valve assembly according to any of claims 1-9, in which the system has an electronic controller (32), and a modulator assembly (40-43) including at least one inlet solenoid-operated valve (40) responsive to anti-lock signals from the controller (32), characterised in that a signal of vehicle deceleration is adapted to be obtained from the controller (32), and the inlet solenoid-operated valve (40) is adapted to be used to isolate the inlet (9) from the outlet (11).

12. A braking system according to claim 10 or claim 11, characterised in that the signal from the pressure sensing means (16) is adapted to be received by one electronic controller (58) adapted to control operation of the solenoid-operated valve (20) for controlling communication between the inlet (8) and the outlet (11), and a signal from a wheel speed sensor is adapted to be received by a second electronic controller (59).

13. A braking system according to claim 12, characterised in that both controllers (58, 59) are adapted to talk to each other.

14. A braking system according to claim 12, characterised in that both controllers (58, 59) are integrated into a single, common, electronic controller assembly (32).

FIG.1.

FIG.2.

EP 0 392 815 A1

FIG.3.

FIG.4.

EP 0 392 815 A1

FIG.5.

FIG.6.

FIG.7

EP 0 392 815 A1

EP 0 392 815 A1

FIG.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2049080 (LUCAS)<br>* abstract; figures 1, 5 *<br>* page 1, line 59 - page 2, line 25 *<br>* page 3, lines 18 - 26 * | 1-7 | B60T8/26 |
| A | | 8 | |
| A | GB-A-2188112 (FAG)<br>* the whole document * | 8, 9, 11 | |
| A | DE-A-3222729 (TEVES)<br>* abstract; figure 1 * | 1 | |
| A | DE-A-3527455 (NISSAN)<br>* abstract; figures 1, 2, 7, 8 * | 1 | |

| TECHNICAL FIELDS SEARCHED (Int. Cl.5) |
|---|
| B60T |

The present search report has been drawn up for all claims

| Place of search | Date of completion of the search | Examiner |
|---|---|---|
| BERLIN | 04 JULY 1990 | BLURTON M.D. |

EPO FORM 1503 03.82 (P0401)